Europäisches Patentamt

European Patent Office

Office européen des brevets

(19)

(11) **EP 1 586 369 A1**

(12) # EUROPEAN PATENT APPLICATION

(43) Date of publication:
**19.10.2005  Bulletin 2005/42**

(51) Int Cl.$^7$: **B01J 10/00**

(21) Application number: **04008712.4**

(22) Date of filing: **13.04.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(71) Applicants:
- **PAUL SCHERRER INSTITUT
  5232 Villigen PSI (CH)**
- **Eidgenössische Technische Hochschule (ETH)
  8092 Zürich (CH)**

(72) Inventors:
- **Fehlmann, Max
  5703 Seon (CH)**
- **Milenkovic, Rade
  5222 Umiken (CH)**

(74) Representative: **Fischer, Michael et al
Siemens Schweiz AG,
Albisrieder Strasse 245
8047 Zürich (CH)**

(54) **Apparatus for generating fine bubbles of gas in a liquid**

(57)    The present invention discloses an apparatus
(2) and a method for generating a two-phase flow (BJF)
comprising a first tube (4) for directing a first fluid flow
(AF), a second tube (8) for directing a second fluid flow
(IWF) and a third tube (6) for directing a third fluid flow
(EWF), wherein the first, second and third tube (4, 6, 8)
are disposed essentially parallel to each other, said first
tube (4) is inserted at least partially and essentially symmetrically within the second tube (8) which extends over
the orifice of the first tube (4) as seen in the flow direction
of the first fluid flow (AF), and the second tube (8) is
aligned within the third tube (6) which extends over the
orifice of the second tube (8), whereby the second and
the third tube (6, 8) have respective fluid supply means
(12, 14) disposed upstream which control the second
fluid flow (IWF) and the third flow (EWF) separately.

Fig. 1

EP 1 586 369 A1

**Description**

The invention relates to an apparatus for generating a two-phase flow, i.e. a liquid/gas flow. Further, the invention relates to a method for generating both homogeneous and heterogeneous two-phase flow.

Dispersed multiphase flows in general constitute classes of fluid flows with universal importance in process and energy technology as well as in the environment. Here, the emphasis is laid on bubbly flows in bubble columns, consisting of gas bubbles (dispersed phase) within a carrier fluid (continuous) phase. This kind of flow frequently occurs in industry, especially in process, chemical, bio and energy technology. Important applications of bubbly flows include ammonolysis, alkylation, alkylation reactions, carbonylation, carboxylation, column flotation, coal liquefaction, hydrogenation, hydrometallurgical operations, halogenation, hydrohalogenation, hydroformylation, Fischer-Tropsch reaction, fermentation, oxidation, ozonolysis, manufacture of fine chemicals, effluent treatment, production of single cell protein, waste water treatment, etc [Deckwer, W.,D., Bubbly Column Reactors, John Wiley&Sons, 1992; Joshi, J.,B., at all, Chemical Engineering Science 57(2002)].

Furthermore, important examples of bubbly flows (steam and water) are those in a steam generator or around the fuel rod bundle of a boiling water reactor, the flow of petroleum and natural gas in a pipeline, etc.

The principal advantages of bubble columns are in general high interfacial areas and transport rates between the gas and liquid phases, and good heat transfer characteristics. The complex fluid dynamic process in bubble column reactors affects the reactor operation and performance.

In industrial applications, it is important to control the flow characteristics in such a way that the processes to be carried out achieve optimum performance. The mentioned characteristics include liquid-phase velocity distributions and turbulence, distributions of bubble size, density and velocity, gas-liquid interfacial properties for mass, momentum and heat exchange, bubble interaction effects such as coalescence and break-up, etc.

It is the aim of this invention to specify an apparatus and a method for generating two-phase flows having the desired properties with respect to bubble size distribution, Reynolds jet-number and other important flow characteristics that can be easily controlled by selecting a small number of designs and operating parameters.

With respect to the apparatus, the aim of generating controlled bubbly flows is achieved according to the invention by a construction comprising at least one first tube for directing a first fluid flow, at least one second tube for directing a second fluid flow and third tube for directing a third fluid flow, wherein the first, second and third tube are aligned essentially parallel to each other, each first tube is inserted substantially axi-symmetrically into a second tube which extends beyond the orifice of the first tube as seen in the flow direction of the first fluid flow, and the second tube is aligned parallel to the third tube which extends beyond the orifice of the second tube, whereby the second and the third tube have respective separated fluid supply means which control the third fluid liquid flow and the second fluid flow separately.

With respect to the method, this aim is achieved according to the invention by a method for generating a homogeneous and heterogeneous bubbly two-phase flow (BJF), comprising the steps of:

a) guiding a first fluid flow (AF) through a first tube (4);
b) guiding a second fluid flow (IWF) through a second tube (8);
c) guiding a third fluid flow (EWF) through a third tube (6);
d) whereby injecting the first fluid flow (AF) having an adjustable flow rate substantially centrally into the second fluid flow (IWF);
e) guiding both the second fluid flow (IWF) and the first fluid flow (AF) within the second tube (8) for producing uniform bubble clusters (strings) in the second fluid of the second tube (8);
f) feeding the mixed second fluid flow (IWF) and the first fluid flow (AF) essentially uniformly into the third fluid flow of the third tube (6); and
g) guiding the mixture of second fluid/first fluid flow (IWF/AF) and the third fluid flow (EWF) to an outlet nozzle (20)
h) whereby controlling the flow rates of the second fluid flow (IWF) and the third fluid flow (EWF) separately from each other.

This method and this embodiment guarantee the adjustment of the considered process parameters when establishing a desired mass and/or heat transfer between two phases. Especially, the specific arrangement of the tube system allows an excellent control of bubble size distribution, void fraction, flow rates and important non-dimensional parameters such as Reynolds jet number, Froude number, Trapping parameter, Vortex-shedding frequency and Richardson jet number. Most of these parameters are controllable within the inventive arrangement by adjusting at least one of the three flows.

In order to generate a jet stream flow with variable velocity and variable but homogeneous bubble density having a comparatively large range in which the flow properties can be controlled at a superior level, a plurality of first and second tubes are provided being essentially equi-distantly disposed, whereby the third tube confines said plurality of first and second tubes at least partially in the region of their orifices and beyond their orifices as seen in the flow direction. Additionally, a proper shaping and sizing of the third tube in its orifice portion can be used to influence the properties of the jet stream flow. The orifice of the third tube is exchangeable and the straight tube may be replaced by nozzles of different shapes in order to influence the size and flow properties of the jet stream.

Furthermore, the vortex structure in the developing region of the jet can be modified by using various triggering techniques. It is possible to excite shear-layer or jet-column instabilities that are characterized by special vortex structures, which influence the transport and exchange processes in and around the jet.

For the generation of a homogeneous bubbly jet flow the liquid and gas flows have to leave the respective tubes with completely independent flow parameters. Therefore, the housing of the inventive apparatus, hereinafter referred to as injector body, has a first chamber (10) for the supply of the first fluid flow, a second chamber (12) for the supply of the second fluid flow and a third chamber (14) for the supply of the third fluid flow, whereby the first, second and third chamber are divided from each other by a first (16) and a second (tube) plate (16) which ensure equal flow rate through the parallel tubes of each stream by providing the adequate pressure drop in the second and first fluid flows that flow through the tubes and are supposed to be mixed downstream on under strictly controlled circumstances. At the exit of the third chamber for the supply of the third fluid flow, a third exchangeable plate is installed in order to provide a adequate pressure drop in the third fluid flow.

For attaining a desired mean bubble size within a narrow standard variation range the first tube may be formed as an injection needle (4) consisting of two tubes. The first tube is actually the capillary tube. The length and the size of this tube are carefully chosen in order to provide adequate pressure drop in the first fluid, such as a gas, that flows through the needle. This capillary tube has a length to inner diameter ratio larger than 50, preferably larger than 400. The second tube has larger inner diameter. The length and the size of this tube are carefully chosen in order to provide the desired range of bubble diameters. The second tube has a length to inner diameter ratio larger than 20, preferably larger than 80. The design of the injection needle helps to homogenize the bubble distribution in the co-currently flowing internal liquid flow.

For obtaining stable, uniform bubble size distribution and in order to vary the bubble diameter, as well as the variation of bubble diameter, the length and size of annular cross-sectional flow area, i.e. the length and diameter of the second tube for internal water supply play an important role. These parameters must be carefully chosen in order to cause adequate pressure drop in the two-phase fluid that flows through the second tube and to provide the desired range of bubble diameters. The ratio between the inner diameter of the second tube and the outer diameter of the needle was 3.4, in this specific design. Normal range for this ratio resides between 1.5 and 8.

In order to achieve a homogeneous transfer of the first/second fluid mixture at the orifice of the second tubes into the embracing third fluid flow, the first fluid flow rate in the first tubes ranges between 0.3 and 17 Nl/min and the inner liquid flow rate ranges between 1 and 20 l/min.

A very simple way of controlling the properties of the jet stream flow such as the jet liquid velocity and the void fraction is to adjust only the outer liquid and the gas flow rate. Further, the bubble size may be controlled by both the first fluid flow rate and the second fluid flow rate.

The bubble injector, presented in this invention, is designed in such a way as provide variation of basic and (the most) important parameters for controlling the process of mass and heat transfer in bubble column reactors such as the Reynolds number of liquid flow, the Richardson number of the bubbly jet flow, Froude number (Fr), Stokes number (St) and trapping parameter (Fr/St) that characterize the bubble movement in the large jet vortices, void fraction (gas hold-up), bubble size, turbulence level in liquid phase, etc. Variation of these judiciously selected operating parameters will lead to the improvement of mass and heat transfer performance of a variety of multiphase reactors and apparatuses.

Examples of the invention are explained according to the following drawings. A brief description of the drawing is given below:

Figure 1     shows schematically a perspective view of the cross sectional area of a bubble jet injector;

Figure 2     schematically shows the working principle of the bubble jet injector according to figure 1, using one first and one second tube;

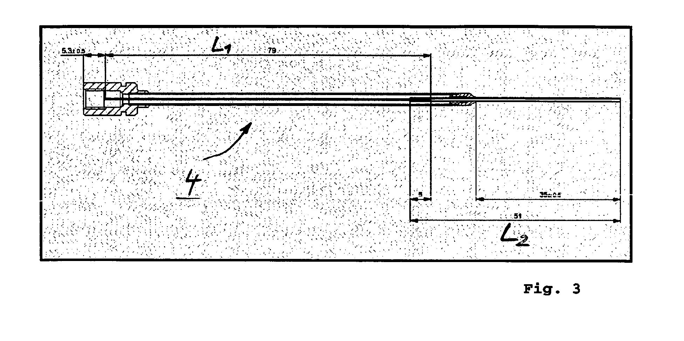

Figure 3     schematically shows an injector needle (the first tube) used with the bubble jet injector according to figure 1; and

Figure 4     schematically illustrates the two-phase flow generated by the bubble jet injector according to figure 1.

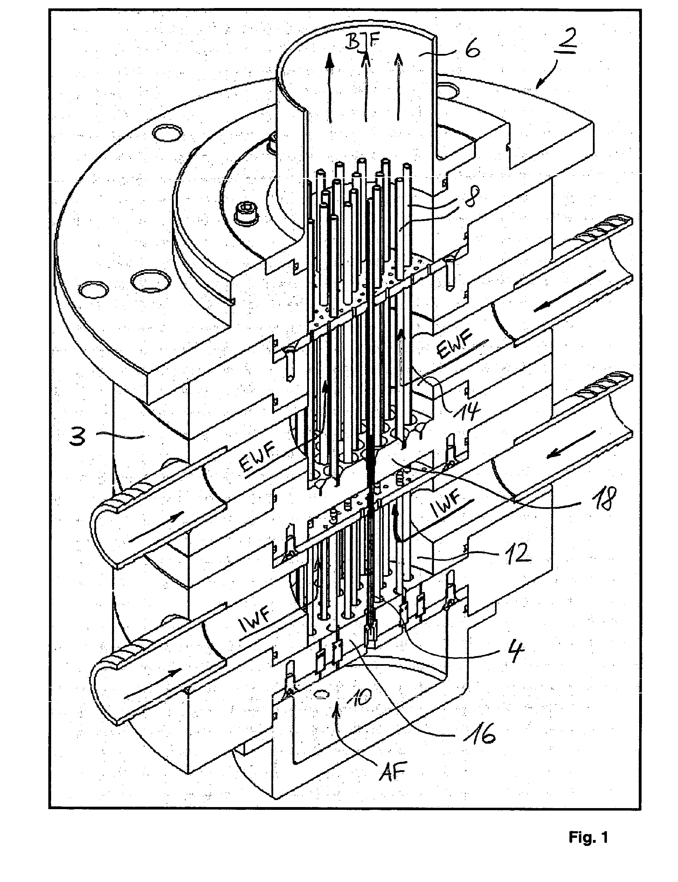

A bubbly-jet injector as presented in Figure 1 was developed after a series of calculations and experiments had been carried out in order to determine the optimal configuration of the different tubes 6, 8 and needles 4 for forming bubbles with uniform size in the range between 1 and 6 mm in co-currently upward-flowing liquid. In order to produce a bubbly jet containing bubbles with uniform but variable size, bubbles are formed by continuously injecting as a first fluid flow an air flow AF through needles 4 into the co-currently flowing water IWF(i.e. internal liquid flow or second fluid flow). The jet flow is formed afterwards by adding an external liquid flow EWF (as the third fluid flow). The effects of geometrical parameters such as diameter of tube 6, 8 and needle 4, length of tube 6, 8 and needle 4, together with liquid velocity inside the tube 8 (the internal liquid flow), air flow rate inside the needle 4 and external liquid flow rate on bubble diameters and shapes were experimentally investigated.

A suitable tube-needle configuration that avoids unstable bubble formation using the needles 4 as first tubes in the sense of the claim language is shown in Figure 1.

As shown in Fig. 1, the bubbly-jet injector 2 comprises three chambers 10, 12, 14 for, from bottom to top, an air injection chamber 10 injecting air through the (hypodermic) needles 4 for generating the air flow AF, a lower water injection chamber 12 injecting water into the tubes 8 for generating the inner water flow IWF and an upper water injection chamber 14 injecting water into the space limited by the outer surface of the tubes 8 and the inner surface of the tube 6 for generating the external or outer water flow EWF. The nozzle 20 on top, shown as a cylindrical version, can be exchanged against others with different shape.

The air injection chamber 10 is sealed against the lower water injection chamber 12 by separation plate 16, i.e. a tube sheet in which the air injection needles are fixed. Another partition plate 18 separates the lower water injection chamber 12 from the upper water injection chamber 14. Even though the three chambers are not sealed from one another in a strict sense because of the open ends in injection needles and inner tubes, no backflow occurs under normal operating conditions because of the different pressures prevailing in chambers 10,12 and 14.

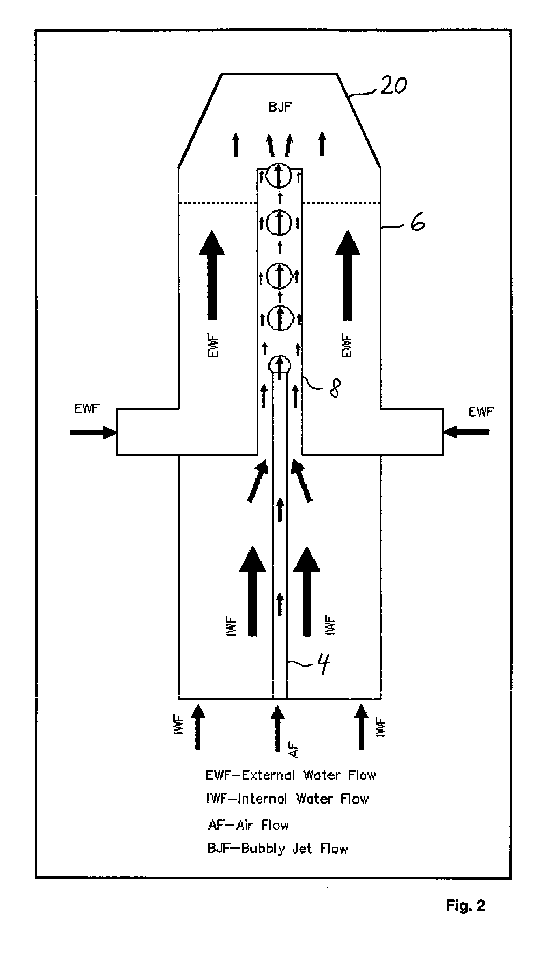

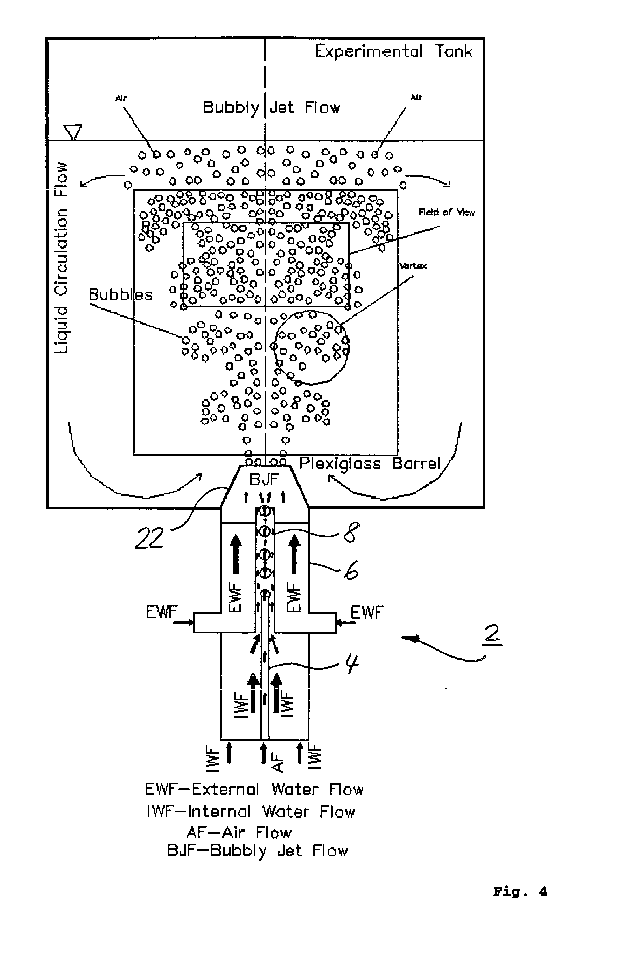

The principal function of the bubbly-jet injector 2 used in the doctoral thesis project "Experimental Investigation of Bubbly Jets" are illustrated in the figures 2 and 4. The geometrical data of the design shown in Figure 1 are:

- The inlet diameter of the nozzles: $D_1$ = 90 mm,
- The exit diameters of the nozzles: $D_2$ = 40 mm; 60 mm; 90 mm,

- The contraction ratios $CR = \dfrac{D_1^{\,2}}{D_2^{\,2}}$ = 5.06; 2.25;1 ,

- Number of tubes 8 and injection needles 4: N = 39,
- Diameter of the tubes 8: $d_{to}/d_{ti}$ = 4.0/3.4 mm,
- Diameter of the needles 4: first part $L_1$ = 79 mm and $d_{nio}/d_{nii}$ = 0.4/0.2 mm and the exit part $L_2$ = 51 mm and $d_{neo}/d_{nei}$ = 1.0/0.6 mm.

The parameters of the liquid and gas flow in the bubble jet injector 2 are given below:

- Liquid flow IWF rate inside the tubes 8:
  The liquid velocity inside the tubes 8 affects the bubble size insofar as an increasing liquid velocity yields smaller bubbles and vice versa. The velocity range in which uniform bubbles could be produced in the experiments extended from about 0.01 up to 1 m/s, which corresponds to a water flow rate range in the 39 tubes 8 of $Q_{LIN}$=0.3 to $Q_{LIN}$=21.24 l/min. The experiments showed that zero liquid velocity inside the tubes 8 leads to an unsteady condition with water and air backflow in at least one of the tubes 8. Bubbles then go down into the first water injection chamber 12 where they can be trapped.

- External liquid flow EWF rate:
  This parameter mainly controls jet liquid BJF velocity and void fraction. It must be large enough to avoid bubble trapping as well as coalescence downstream of the tube exits. It could be observed that changes of the EWF rate do not significantly affect the bubble size.

- Total liquid flow rate at the exit of the jet nozzle 20:
  The liquid velocity at the exit of the jet should be adjustable in a sufficiently wide range. With the described design, it extends from a minimum value of about 0.01 m/s, corresponding to a Reynolds jet number of about 70 calculated for the largest nozzle diameter, to a maximum value of about 2 m/s, leading to a Reynolds jet number of approximately 100000. The minimum liquid velocity at the jet exit is achieved with zero outside liquid flow rate and the minimum liquid flow rate inside the tubes mentioned above. The maximum liquid velocity at the jet exit can be achieved within a range of combinations of inside and outside liquid flow rates in the injector. Since the inside flow rate IWF is determined by the desired bubble size and its maximum is rather small, most of the flow is contained in EWF. The maximum total flow rate used up to now is 220 l/min resulting for the smallest $D_2$ in a $Re_{jet}$ = $1.2 \cdot 10^5$.

- Gas flow rate:
  Together with the liquid flows, this parameter also controls bubble size and void fraction. It is an important parameter that has to be carefully adjusted. The presented needle design allows this to be properly done.
  The gas velocities inside the needles 4 can be varied between about 0.5 and 33 m/s, corresponding to total gas flow rates between 0.3 and 20 Nl/min and largest diameter of the injection needle. Increasing the gas flow rate beyond certain limits leads to unstable conditions in the injection tubes 8 and to non-uniform bubble sizes because of bubble coalescence or transition to churn or annular flow. A possible measure to avoid this is to simultaneously increase the internal liquid flow rate.

- Bubble size:

  o The bubbles that were produced in the above-mentioned bubbly-jet injector 2 had diameters between about 1 to 6 mm, i.e. they belong to the wobbly regime.

- Void fraction:
  The void fraction of the jet is determined by the gas flow rate and the total liquid flow rate. Since the bubble size is determined by the liquid flow rate in the tubes 8 together with the gas flow rate in the needles 4, a desired combination of bubble size and void fraction is obtained by adjusting the outer flow for a selected gas flow rate and internal liquid flow rate. Calculations of the homogenous void fraction for operating flow conditions show that, for stable bubbly-flow conditions, a range between very low void fractions of about 0.1% up to 20% and more can be covered.
  The achievable values are however strongly correlated with bubble size and the liquid velocity at the jet exit.

- Other parameters of the described system:
  The system temperature is also controlled and kept constant. In general, the experimental temperature range depends on the liquid and the gas chosen for the two-phase flow and the intended process. For water and air, as described for this embodiment, suitable temperatures range between about 10 and 50°C.
  The absolute pressure of the gas at the exit of the pressure reducer is adjustable between 1.5 and 6 bar.
  In case of vortex triggering, i.e. excitement of the bubbly jet flow, the frequency is selected to lie below 15 Hz, the maximum scanning frequency of the PIV system used for velocity visualization.

The considerations made above show that the basic adjustable parameters are jet diameter, internal and external liquid flow rate and gas flow rate.
The basic parts of the injector that can be exchanged are:

chamber separation plates 16, 18, nozzle 20, needles 4 and
second and third tubes 8, 6, as well as distribution plates 21,22 and 23. Also, a wire mesh can be inserted between nozzle 20 and chamber separation plate 24.

The operating parameters are chosen in such a way that the relative size of the different forces acting on the bubbles and the related non-dimensional groups can be varied. Furthermore, one of the main objectives of this system design is also to generate coherent structures in the jet flow and to determine their influence and role on bubble movement.
The performance of heat and mass transfer equipment in industrial application is strongly related to these flow properties.
Three non-dimensional parameters determining bubble movement Fr, r and $St_T$, can be expressed as functions of the Reynolds jet number as follows:

$$Re_{jet} = \frac{U_2 D_2}{\nu}, \qquad (1)$$

$$Fr = C_{Fr}\, Re_{jet}^2, \qquad (2)$$

with

$$C_{Fr} = \frac{v^2}{gD_2^3} \, ,$$

$$\Gamma = C_\Gamma \, Re_{jet}, \tag{3}$$

with

$$C_\Gamma = \frac{v}{V_T D_2} \, ,$$

and

$$St_T = C_{St} \, Re_{jet}, \tag{4}$$

with

$$C_{St} = \frac{v V_T}{gD_2^2} \, .$$

$C_{Fr}$, Cr and $C_{St}$ are also dimensionless and can be expressed by a Bubble Re number, a Bubble Fr number and the relative size of the bubbles β.
In general, the terminal bubble velocity ($V_T$) in still fluid is a function of the bubble diameter and the physical properties of the fluid. The relevant the physical properties of the fluid and the bubble dimension lead to two independent non-dimensional groups, e.g. defined as the Morton number:

$$Mo = \frac{g \cdot v^4 \cdot \rho^3}{\sigma^3} \tag{5}$$

and the Eötvos or Bond number (Eo$=\frac{\rho \cdot d^2 \cdot g}{\sigma}$). In the absence of surfactants, the terminal rise velocity of a single bubble or the Bubble Reynolds number $Re_T$ and the corresponding friction coefficient $C_{dT}$ can be expressed as a function of these dimensionless numbers.

The dependency of Fr, Γ and $St_T$ on bubble diameter is not very pronounced in the considered bubble-size range, because of the only moderate change of the terminal rise velocity.

Variation of the parameter Γ also changes the ratio between shear-induced and bubble-induced turbulence in the jet. Different jet sizes are used for the following reasons:

- The relative size of the bubbles β = d/δ is an important geometry parameter for bubble movement in vortices of size δ and also plays a role in visualization and application of PIV for bubble velocity measurement (Resolution).
- The relative size of the parameters Fr and Γ, both of which grow with $Re_{jet}$, can be varied.
- For the bubbly-jet injector (2) considered here, different nozzle diameters together with different wire-mesh sizes also mean different inlet conditions (Velocity profile, turbulence level). Inlet and boundary conditions determine the dynamics of bubbly-jet fluid flow.

Considering the expressions for $St_T$ and r, one can easily conclude that, since in the bubble size range 1.5 to 4 mm, an increase of the bubble diameter causes a decrease of the terminal velocity, it leads to a slight increase of trapping parameter and Stokes number.

For bubbles with diameter below 1.5 mm, the effect of d on $V_T$, and correspondingly, on r and $St_T$ is much greater, these quantities vary by an order of magnitude between d=0.1 mm and d=1.5 mm.
Finally, the total liquid flow rate $Q_L$ and the vortex shedding frequency f are also related to the $Re_{jet}$ number. For simplicity, $U_2$ is assumed to be the superficial liquid velocity. It follows for the flow rate that:

$$Q_L = C_Q \, Re_{jet}, \text{ with } C_Q = \frac{\pi D_2 \nu}{4} \tag{6}.$$

The excitation frequency f for the most unstable mode of the jet-column instability is given by the Strouhal number [S.C.

Crowe, F.H. Champagne: Orderly structure in jet turbulence. J. Fluid Mech. 48 (1971), 547-591]:

$$Str = \frac{D_2 f}{U_2} \approx 0.3 \tag{7}$$

and therefore:

$$f = C_f \, Re_{jet}, \text{ with } C_f = 0.3 \frac{\nu}{D_2^2} \tag{8}.$$

The range of jet diameters and Re numbers considered allows the condition f < 15Hz to be satisfied if $Re_{jet}$ < 80000 for the smallest nozzle diameter in the table below.

The coefficients of equations (2),(3),(4),(6) and (8) and the length scale ratio β are put together in the following table for three different nozzle diameters and fixed bubble size d=2 mm ($V_T$=0.29 m/s).

| $D_2$ [mm] | $C_{Fr}$ | $C_\Gamma$ | $C_{St}$ | $C_Q$ [1/s] | $C_f$ [Hz] | β |
|---|---|---|---|---|---|---|
| 40 | $1.59 \ 10^{-9}$ | $8.62 \ 10^{-5}$ | $1.85 \ 10^{-5}$ | $3.14 \ 10^{-5}$ | $1.875 \ 10^{-4}$ | $1.00 \ 10^{-1}$ |
| 60 | $4.72 \ 10^{-10}$ | $5.75 \ 10^{-5}$ | $8.21 \ 10^{-6}$ | $4.71 \ 10^{-5}$ | $8.333 \ 10^{-5}$ | $0.67 \ 10^{-1}$ |
| 90 | $1.40 \ 10^{-10}$ | $3.83 \ 10^{-5}$ | $3.65 \ 10^{-6}$ | $7.07 \ 10^{-5}$ | $3.704 \ 10^{-5}$ | $0.44 \ 10^{-1}$ |

The range, within which Fr and r can be varied during the experiment typically extend from about 0.1 to 10 and that of St from 0.001 to 1.

Presented way of expressing these parameters simplify operating the injector and adjusting desirable flow conditions.

The (homogeneous) void fraction $\varepsilon_h = Q_G/(Q_L+Q_G)$ determines void feedback and together with the bubble size, also bubble interaction. The void fraction range that can be covered strongly increases with bubble size, so that high $\varepsilon_h$ can only be attained for large bubbles, which results from the required high gas flow rates. Assuming that the gas velocity in the needles 4 is limited in order to avoid non-uniform bubble sizes, the results show that for high $Re_{jet}$ and bubble diameters only small void fractions can be produced.

In principle, higher void fractions can always be obtained (also for large $Re_{jet}$) numbers by further increasing the gas flow rate if bubble-size uniformity is not required. Even for such high gas flow rate, varying the internal liquid flow rate can also change the mean bubble size. Bubbly flows having high void fractions and containing a wider range of bubble sizes can be considered as possible operating conditions.

The void fraction also determines the downstream ranges of jet-like, transition and plume-like behavior of bubbly jets flowing upwards in the direction of the vertical axis. These ranges roughly are:

$$0 < \frac{z}{D_2} \cdot Ri_{jet}^{1/2} < 1, \text{ jet}$$

$$1 < \frac{z}{D_2} \cdot Ri_{jet}^{1/2} < 5,$$

transition

$$5 < \frac{z}{D_2} \cdot Ri_{jet}^{1/2} < \infty,$$

plume
with the jet Richardson number

$$Ri_{jet} = \frac{g \cdot \varepsilon_2 \cdot D_2}{U_2^2} = \frac{\varepsilon_2}{Fr} \qquad (9).$$

For $Ri_{jet}^{1/2}$ <0.2, the buoyancy forces begin to influence the jet only downstream of the developing region ($\frac{z}{D_2}$<5), where the preferred axisymmetric vortex mode reaches its maximum ($\frac{z}{D_2}\approx 4$), but with $Ri_{jet}^{1/2}$ >1, the transition from jet to plume already takes place in the developing region between $1<\frac{z}{D_2}<5$. At such values of $Ri_{jet}$ buoyancy has a strong influence on the formation of the large vortices.

The following general conclusions relating the above mentioned bubbly-jet injector design are presented below:

1) For laminar and transition $Re_{jet}$ numbers $< 10^4$, Fr and r are small and bubble trapping in the large vortices of the jet- column instability does not occur. Only for very small bubbles (<0.7 mm) with $V_T$ < 0.1m/s trapping may become important.

2) For $Re_{jet} > 10^4$, Froude number and trapping parameter become large enough for bubble trapping, but with $D_2$=90 mm only at about $Re_{jet} = 10^5$.

3) The relative importance of Fr and $\Gamma$, as expressed by St, changes by a factor of 5 from the smallest to the largest nozzle diameter. In the interval $3\cdot 10^4 < Re_{jet} < 10^5$ one can thus cover the range from inertia dominated to buoyancy dominated bubble motion.

4) Using a smaller minimum nozzle diameter in order to obtain larger $\Gamma$ at small Re numbers is not recommended because the length scale ratio $\beta$ becomes rather large. This possibility, will however, be considered if, in future tests, bubbles with smaller diameters, i.e. D < 1mm, can be produced more uniformly.

5) Reasonable shedding frequencies f and liquid flow rates $Q_L$ are obtained for the range $10^4 < Re_{jet} < 10^5$.

6) The range of attainable void fractions strongly increases with bubble size and decreases with $Re_{jet}$. The maximum void fractions are rather small for $Re_{jet}$ numbers above 20'000. If bubbles are not required to have uniform size, homogeneous void fractions of up to 10% can also be obtained with higher $Re_{jet}$ numbers.

Variation of these carefully selected operating parameters, as a part of overall multiphase fluid dynamics, controls the fluid mixing and phase transport processes, which is a crucial point that determines the performance of multiphase reactors and apparatus.

The above-mentioned examples and embodiments should be understood in such a way that various alternatives to the embodiment of the invention described herein, may be employed by a person skilled in the technology. It is intended that the following claims define the scope of the invention,the method and the apparatus.

**Claims**

1. An apparatus (2) for generating a two-phase flow (BJF) comprising a first tube (4) for directing a first fluid flow (AF), a second tube (8) for directing a second fluid flow (IWF) and, a third tube (6) for directing a third fluid flow (EWF), wherein the first, second and third tube (4, 6, 8) are aligned essentially parallel to each other, said first tube (4) is inserted at least partially and essentially symmetrically within the second tube (8), which extends over the orifice of the first tube (4) as seen in the flow direction of the first fluid flow (AF), and the second tube (8) is aligned with the third tube (6) which extends over the orifice of the second tube (8), whereby the third and the second tube (6, 8) have respective second and third fluid supply means (12, 14) disposed upstream, which control the third fluid flow (EWF) and the second fluid flow (IWF) separately.

2. The apparatus (2) according to claim 1,
   **characterized in that**
   a plurality of first and second tubes (4, 8) are provided being substantially equi-distantly arranged, whereby the third tube (6) embraces said plurality of second and first tubes (8, 4) at least partially in the region of their orifices and beyond their orifices as seen in the flow direction.

3. The apparatus according to claim 1 or 2,
**characterized in that**
an injector body (3) is designed having a first chamber (10) for the supply of the first fluid flow (AF), a second chamber (12) for the supply of the second fluid flow (IWF) and a third chamber (14) for the supply of the third fluid flow (EWF), whereby the first, second and third chamber (10, 12, 14) are separated from each other by a first and a second (tube) plate (16, 18) having openings for the insertion of the first and the second tubes (4, 8) and whereby the first and the second chamber (10, 12) are sealed in the downstream direction from each other by the insertion of the first tubes (4) into the first sieve plate (16).

4. The apparatus (2) according to any of the preceding claims,
**characterized in that**
the first tube (4) is formed as an injection needle consisted of two parts; the first tube is the capillary tube.

5. The apparatus (2) according to any of the preceding claims,
**characterized in that**
the length and diameter of the second tube for second fluid supply play were chosen in order to provide adequate pressure drop in two-phase fluid that flows through the second tube and to provide the desired range of bubble diameters.

6. The apparatus (2) according to any of the preceding claims,
**characterized in that**
the first fluid flow rate in the first tubes (4) and the second fluid flow rate in the second tubes (8) can be varied independently in order to provide the desired range of bubble diameters.

7. The apparatus (2) according to any of the preceding claims,
**characterized in that**
the jet liquid velocity and the void fraction at the orifice of the third tube (6) is controlled by the adjustment of the velocity of the third fluid flow (EWF) and the first fluid flow rate (AF).

8. The apparatus (2) according to any of the preceding claims,
**characterized in that**
the bubble size is controlled by both the first fluid flow velocity and the second fluid flow velocity.

9. A method for generating a homogeneous and heterogeneous two-phase flow (BJF), comprising the steps of:

a) guiding a first fluid (AF) through a first tube (4);
b) guiding a second fluid flow (IWF) through a second tube (8);
c) guiding a third fluid flow (EWF) through a third tube (6);
d) whereby injecting the first fluid flow (AF) having an adjustable flow rate essentially symmetrically into the second fluid flow (IWF);
e) guiding both the second fluid flow (IWF) and the first fluid flow (AF) within the second tube (8) for mixing the second and the first fluid in the second tube (8);
f) feeding the mixed internal bubbly fluid flow (IWF/AF) essentially symmetrically into the third tube (6); and
g) guiding both the mixed internal fluid flow (IWF/AF) and the third fluid flow (EWF) to an outlet nozzle (20)
h) whereby controlling the flow rates of the second fluid flow (IWF) and the third fluid flow (EWF) separately from each other.

**Fig. 1**

EWF—External Water Flow

IWF—Internal Water Flow

AF—Air Flow

BJF—Bubbly Jet Flow

Fig. 2

Fig. 3

EWF—External Water Flow
IWF—Internal Water Flow
AF—Air Flow
BJF—Bubbly Jet Flow

Fig. 4

**European Patent Office**

**EUROPEAN SEARCH REPORT**

Application Number

EP 04 00 8712

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 218 253 A (MITSUBISHI RAYON ENG) 15 April 1987 (1987-04-15) * abstract * * column 3, line 45 - column 5, line 4; figures 1,2 * * claim 1 * ----- | 1-9 | B01J10/00 |
| X | WO 02/06167 A (CORDOVA DAVID KEVIN ; WILLIAMS THOMAS G (US)) 24 January 2002 (2002-01-24) * abstract * * page 3 - page 4; figure 1 * * claim 1 * ----- | 1-9 | |
| X | WO 01/97958 A (FUJISATO RYOSAKU) 27 December 2001 (2001-12-27) * abstract; figures 30a,32 * ----- | 1-9 | |
| A | EP 0 323 646 A (UNION CARBIDE CORP) 12 July 1989 (1989-07-12) * abstract; figure 3 * ----- | 1-9 | TECHNICAL FIELDS SEARCHED (Int.Cl.7) B01J B01F |

The present search report has been drawn up for all claims

| Place of search | Date of completion of the search | Examiner |
|---|---|---|
| Munich | 19 October 2004 | Thomasson, P |

EPO FORM 1503 03.82 (P04C01)

## ANNEX TO THE EUROPEAN SEARCH REPORT
## ON EUROPEAN PATENT APPLICATION NO.

EP 04 00 8712

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2004

| Patent document cited in search report | | Publication date | Patent family member(s) | | Publication date |
|---|---|---|---|---|---|
| EP 0218253 | A | 15-04-1987 | CA | 1309193 C | 20-10-1992 |
| | | | CN | 86106673 A ,B | 15-04-1987 |
| | | | DE | 3684218 D1 | 16-04-1992 |
| | | | EP | 0218253 A2 | 15-04-1987 |
| | | | JP | 2101805 C | 22-10-1996 |
| | | | JP | 8004731 B | 24-01-1996 |
| | | | JP | 62168526 A | 24-07-1987 |
| | | | KR | 9005507 B1 | 30-07-1990 |
| | | | US | 4690764 A | 01-09-1987 |
| WO 0206167 | A | 24-01-2002 | WO | 0206167 A1 | 24-01-2002 |
| | | | AU | 7221901 A | 30-01-2002 |
| WO 0197958 | A | 27-12-2001 | AU | 7461001 A | 02-01-2002 |
| | | | CN | 1431927 T | 23-07-2003 |
| | | | WO | 0197958 A1 | 27-12-2001 |
| EP 0323646 | A | 12-07-1989 | US | 4861352 A | 29-08-1989 |
| | | | AT | 90005 T | 15-06-1993 |
| | | | BR | 8806967 A | 29-08-1989 |
| | | | CA | 1339617 C | 06-01-1998 |
| | | | DE | 3881502 D1 | 08-07-1993 |
| | | | DE | 3881502 T2 | 23-09-1993 |
| | | | EP | 0323646 A2 | 12-07-1989 |
| | | | ES | 2040827 T3 | 01-11-1993 |
| | | | GR | 3008747 T3 | 30-11-1993 |
| | | | JP | 1297105 A | 30-11-1989 |
| | | | JP | 1871849 C | 06-09-1994 |
| | | | JP | 5086242 B | 10-12-1993 |
| | | | KR | 9301596 B1 | 06-03-1993 |
| | | | MX | 168329 B | 18-05-1993 |
| | | | US | 4931225 A | 05-06-1990 |

EPO FORM P0459

For more details about this annex : see Official Journal of the European Patent Office, No. 12/82